# EUROPEAN PATENT APPLICATION

(11) **EP 4 648 464 A1**
(43) Date of publication of application: **12.11.2025**
(21) Application number: 24783991.3
(22) Date of filing: 28.02.2024
(51) Int. Cl.: H04W 24/04, H04L 67/00, G06F 8/65

(54) **METHOD AND APPARATUS FOR UPDATING FUNCTIONAL MODULE**

(30) Priority: 06.04.2023 CN 202310384569
(71) Applicant: ZTE Corporation, Shenzhen, Guangdong 518057 (CN)
(72) Inventor: LU, Zhaohua, Shenzhen, Guangdong 518057 (CN); LIU, Kun, Shenzhen, Guangdong 518057 (CN); XIAO, Huahua, Shenzhen, Guangdong 518057 (CN); ZHENG, Guozeng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/079127
(87) International publication number: WO 2024/207906

(57) **Abstract**

Disclosed are a method and an apparatus for updating functional module. The method for updating functional module comprises: a second node sending updating information to a first node, and correspondingly, the first node receiving the updating information from the second node. The updating information is configured to indicate updating of a functional module.

## Description

The present disclosure claims a priority to Chinese Patent Application No. 202310384569.1, and filed on April 06, 2023, the entire content of which is incorporated into the present application by reference.

### TECHNICAL FIELD

Embodiments of the present disclosure relate to the field of communication technologies, and in particular, to a method and an apparatus for updating a functional module.

### BACKGROUND

With the continuous development of communication technologies, in typical application scenarios of the 6th generation mobile communication technology (6^{th} Generation Mobile Communication Technology, 6G), as representative of smart city, smart transportation, and smart home, there are a large quantity of intelligent automation devices with highly differentiated capabilities, which have increasingly-stringent communication requirements for extremely low latency, extremely high reliability, ultra-large bandwidth, and massive access.

### SUMMARY

In an aspect, a method for updating a functional module is provided, applied to a first node and the method includes: receiving updating information from a second node. The updating information is used to indicate an update for the functional module.

In another aspect, a method for updating a functional module is provided, applied to a second node and the method includes: sending updating information to a first node. The updating information is used to indicate an update for the functional module.

In yet another aspect, an apparatus for updating a functional module is provided, applied to a first node and the apparatus includes: a receiving unit, configured to receive updating information from a second node. The updating information is used to indicate an update for the functional module.

In yet another aspect, an apparatus for updating a functional module is provided, applied to a second node and the apparatus includes: a sending unit, configured to send updating information to a first node. The updating information is used to indicate an update for the functional module.

In yet another aspect, a first node is provided. The first node may implement the functions in any one of the above aspects, and the functions may be implemented by hardware, for example, in some embodiments, the first node may include: a processor and a communication interface, and the processor and the communication node may be configured to support the first node to implement the functions involved in any one of the above aspects, for example: the processor receives the updating information by the communication interface.

In some embodiments, the first node may further include a memory, and the memory is configured to store computer-executed instructions and data necessary for the apparatus. When the apparatus is running, the processor executes the computer-executed instructions stored in the memory, so that the apparatus performs the method for updating the functional module described in any one of the above aspects or the embodiments.

In yet another aspect, a second node is provided. The second node may implement the functions in any one of the above aspects or the embodiments, and the functions may be implemented by hardware, for example, in some embodiments, the second node may include: a processor and a communication interface, and the processor and the communication node may be configured to support the second node to implement the functions described in any one of the above aspects or the embodiments, for example: the processor sends the updating information by the communication interface.

In some embodiments, the second node may further include a memory, and the memory is configured to store computer-executed instructions and data necessary for the apparatus. When the apparatus is running, the processor executes the computer-executed instructions stored in the memory, so that the apparatus performs the method for updating the functional module described in any one of the above aspects or the embodiments.

In yet another aspect, a computer readable storage medium is provided, the computer readable storage medium may be a readable non-volatile storage medium, the computer readable storage medium stores computer instructions or a program, and the computer instructions or the program, when executed on a computer, cause the computer to perform the method for updating the functional module described in any one of the above aspects or the embodiments.

In yet another aspect, a computer program product containing instructions is provided, and the instructions, when executed on a computer, cause the computer to perform the method for updating the functional module described in any one of the above aspects or the embodiments.

### BRIEF DESCRIPTION OF THE DRAWINGS

FIG. 1 is a structural schematic diagram of a communication system according to some embodiments.
FIG. 2 is a structural schematic diagram of an apparatus for updating a functional module according to some embodiments.
FIG. 3 is a schematic diagram of a method for updating a functional module according to some embodiments.
FIG. 4 is a schematic diagram of another method for updating a functional module according to some embodiments.
FIG. 5 is a schematic diagram of yet another method for updating a functional module according to some embodiments.
FIG. 6 is a structural schematic diagram of another apparatus for updating a functional module according to some embodiments.
FIG. 7 is a structural schematic diagram of yet another apparatus for updating a functional module according to some embodiments.

### DETAILED DESCRIPTION

In order to enable those skilled in the art to better understand the technical solutions of the embodiments of the present disclosure, the technical solutions in the embodiments of the present disclosure will be described clearly and completely below, in conjunction with the drawings in the embodiments of the present disclosure.

In the description of the present disclosure, unless otherwise specified, the character "/" means "or", and for example, "A/B" may mean A or B. Herein, "and/or" merely describes an associated relationship of associated objects, and means that there are three kinds of relationships, and for example, A and/or B may mean: only A, only B, and both A and B. In addition, "at least one" means one or more, and "plurality of / multiple / many / several" and variants thereof mean two or more. Words, such as "first" and "second", etc., do not limit the number and execution order, and the words, such as "first" and "second", etc., also do not necessarily limit different items. At least one of (items) or similar expressions refer to any combination of these items, including a single item (one) or any combination of plural items (ones). For example, at least item (one) of a, b, or c may mean: only a, only b, only c; both a and b, both a and c, or both b and c; or all of a and b and c, where the number of a, b and c may be singular or plural.

It should be noted that in the present disclosure, terms such as "exemplary (exemplarily)" or "for example (such as, e.g.)" are used to represent examples, illustrations, or descriptions. Any embodiment or design solution described with "exemplary (exemplarily)" or "for example (such as, e.g.)" in the present disclosure should not be interpreted as being more preferred or advantageous than other embodiments or design solutions. Specifically, the use of the terms such as "exemplary (exemplarily)" or "for example (such as, e.g.)", etc., is intended to present related concepts in a specific manner.

In the embodiments of the present disclosure, an "indication" or its variants may include a direct indication and an indirect indication. For example, by taking an example of indication information as follows, the indication information may directly carry information A itself or its index, to achieve the purpose of directly indicating the information A. Alternatively, the indication information may also carry information B having an associated relationship with the information A, thereby achieving the purpose of indirectly indicating the information A while indicating the information B.

In the wireless communication technology, in the new radio (New Radio, NR) of the fifth generation mobile communication system (5^{th} Generation Mobile Communication System, 5G), for system information, a master information block (Master Information Block, MIB) may be sent through a physical broadcast channel (Physical Broadcast Channel, PBCH) in a single side band (Single Side Band, SSB), and then a system information block (System Information Block, SIB) may be carried through a PDSCH (Physical Downlink Shared Channel). The SIB may be divided into a plurality of blocks, each of which carries different system information.

The large-scale commercialization of the 5G technology facilitates the transformation of the economic society to digitalization, networking and intelligence, and pushes the network into a new era of the Internet of Everything. The rapidly emerging application requirements for aspects such as smart city, smart transportation, smart industrial production, etc., have led to continuously-strengthening development trends of differentiated network device capabilities, diversified network functions, and intelligent network management and control, further facilitating the arrival of the 6G technology for the intelligent Internet of Everything.

In typical application scenarios of the 6G technology, as representative of smart city, smart transportation, and smart home, there are a large quantity of intelligent automation devices with highly differentiated capabilities, which have increasing communication requirements and increasingly-stringent communication requirements for extremely low latency, extremely high reliability, ultra-large bandwidth, and massive access. At the same time, applications of intelligent automation types also have requirements for high precision, high resolution, etc., on sensing capabilities. That is, in the 6G era, types of terminals accessing a system will become extremely diverse, and if the data channel generation method of NR with a limited number of combinations is adopted, the data transmission efficiency of the terminals will be greatly restricted while the system spectrum efficiency will also be affected.

On the one hand, the proliferation of wireless communications and sensing devices causes the contradiction between the endless growth of the service requirements and the radio resources and the limited computing power, to be increasingly obvious. On the other hand, the implementation of beyond 5G (5G and Beyond, B5G) / 6G vision needs the help of technical means of the closed-loop information flow processing of: the acquiring of environmental sensing information, the information interaction and sharing, the intelligent information processing, and the layer-by-layer distribution of control information (including control information for the communication network and control instructions for application execution devices). It has been difficult for the existing wireless network architecture and related technologies to satisfy the service requirements emerged in the B5G/6G era, and it is urgent to develop new network architectures and enabling technologies that can efficiently utilize resources and intelligently adapt to differentiated applications.

The rise of artificial intelligence (Artificial Intelligence, AI) technologies as representative of deep learning, reinforcement learning, and distributed learning, etc., has had a broad and profound impact on various fields such as communication network optimization, intelligent sensing, and control applications, etc., and has greatly facilitated the possibility of deep integration in the fields of communication, sensing, and computing.

Based on this, if 6G implements the integration and symbiosis of the communication capability and the sensing capability under the empowerment of the intelligent computing technology, the 6G network will be empowered with the capability to intelligently sense the physical world and mirror-mapped digital world all the time and everywhere. The massive new intelligent terminals connected will rely on the increasingly-strengthening computing power for learning, communication, cooperation and competition, thereby implementing self-learning, self-operation and self-maintenance of the network, and then implementing the vision of the integrated communication-sensing-computing 6G network.

In some application scenarios, for example, in the communication system, the network device and terminal may implement the self-learning, the self-operation, and the self-maintenance of data based on a functional module with the Al technology.

The functional module may also be referred to as an Al module or an Al model or named by other names, which is not limited thereto. The functional module may have a model obtained by training based on an algorithm, or have a function of a model. For example, the functional module may infer the received data and acquire a processing result. For another example, the terminal may communicate with the base station by the functional module. With the continuously increasing in the quantity and types of data between the base station and the terminal, functions of the functional module on the base station side are also increasing and improving. However, how to ensure the updating of functions of the functional module on the terminal side has become an urgent problem to be solved.

In view of this, the embodiments of the present disclosure provide a method for updating a functional module, where a second node may send updating information used to indicate updating of a functional module, to a first node. In this way, the first node, after receiving the updating information, may determine whether to perform an updating operation according to the updating information.

It should be noted that, the technical solutions provided in the embodiments of the present disclosure may be applied to various communication systems, for example, the 6G communication system, a future evolutional system, or a multi-communication fusion system, etc.

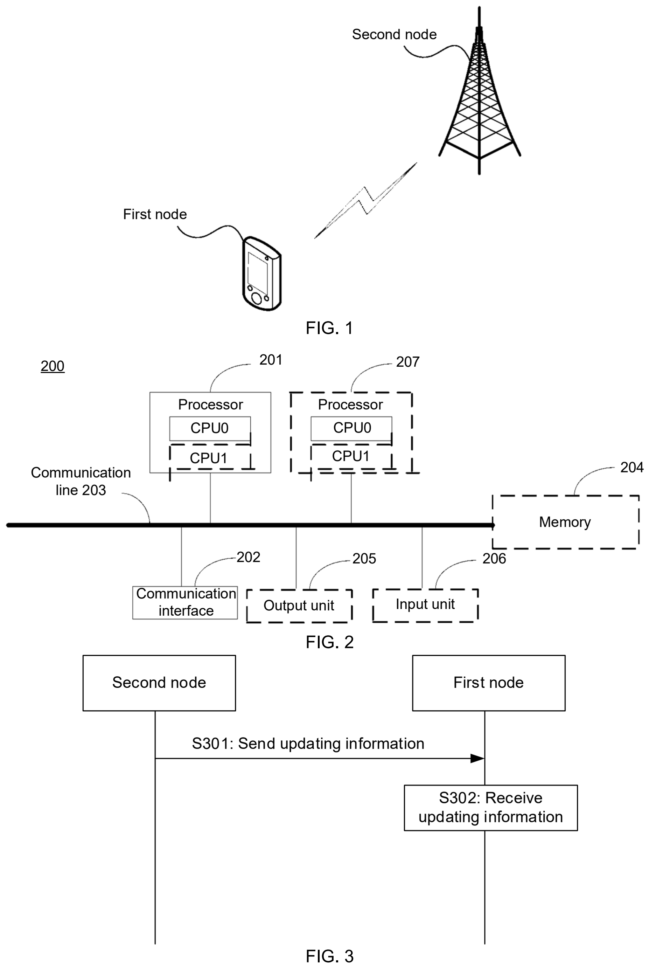

Exemplarily, FIG. 1 shows a structural schematic diagram of a communication system, provided in the embodiments of the present disclosure. The communication system may include a first node and a second node. The first node may be communicatively connected with the second node. For example, the first node may be communicatively connected with the second node by a radio channel.

When the second node may be a network device, or a device with a function of a network device. The second node may be used to implement functions, such as resource scheduling, radio resource management, and radio access control, etc., of terminals. In some embodiments, the second node may be any one of a small base station, a radio access point, a receiving-sending point or a group of receiving-sending points (Transmission Receive Point, TRP), a transmission point (Transmission Point, TP), and some other access nodes.

The first node may be a terminal, or a device with a function of a terminal device. The terminal may also be referred to as a terminal device, a user equipment (User Equipment, UE), a mobile station, a mobile terminal, etc. The terminal device may be a mobile phone, a tablet computer, a computer with a radio transceiver function, a virtual reality terminal device, an augmented reality terminal device, a wireless terminal in industrial control, a wireless terminal in unmanned driving, a wireless terminal in remote surgery, a wireless terminal in transportation safety, a wireless terminal in a smart city, a wireless terminal in a smart home, etc. The embodiments of the present disclosure do not limit the device form adopted by the terminal device.

It should be noted that, FIG. 1 is only an exemplary frame diagram, and a number of nodes and names of the various devices included in FIG. 1 are not limited, and in addition to the functional nodes shown in FIG. 1, the communication system may also include other nodes, such as a third node.

The third node may be a device with the same type as the second node, and for example, the third node may be a sending node or a base station, or a group of sending nodes or base stations.

The third node may be a device with a type different from the second node. For example, a third node may include: a server or a node with a function of a server, a storage device or a node with a function of a memory, a database or a node with a function of a database. The server may be an Al server. The storage device may be an Al storage device.

The server may be used to generate the updating information and send the updating information to the first node. The server may also be used to provide the updating information of the functional module. For example, the server may update the functional module according to communication data between the first node and the second node. Subsequently, the first node and the second node may acquire the updated functional module or the updating data of the updated functional module, from the server. For related contents, reference may be made to descriptions of subsequent embodiments.

In some scenarios, the server may be a single server, or a server cluster composed of a plurality of servers. In a part of implementations, the server cluster may also be a distributed cluster.

The embodiments of the present disclosure do not limit the application scenarios. The system architectures and the service scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the network architectures and the emergence of new service scenarios, the technical solutions provided in the embodiments of the present disclosure are also applicable to similar technical problems.

In some embodiments, the devices in FIG. 1 may each adopt the composition structures shown in FIG. 2, or include the components shown in FIG. 2. FIG. 2 is a schematic diagram of compositions of an apparatus 200 for updating a functional module provided in the embodiments of the present disclosure, and the apparatus 200 for updating the functional module may be the second node, or a chip or a system on chip in the second node. Alternatively, the apparatus 200 for updating the functional module may be the first node, or a chip or a system on chip in the first node. As shown in FIG. 2, the apparatus 200 for updating the functional module includes a processor 201, a communication interface 202, and a communication line 203.

Furthermore, the apparatus 200 for updating the functional module may also include a memory 204. The processor 201, the memory 204 and the communication interface 202 may be connected with each other by the communication line 203.

The processor 201 is a central processing unit (CPU), a general-purpose processor, a network processor (Network Processor, NP), a digital signal processor (Digital Signal Processing, DSP), a microprocessor, a microcontroller, a programmable logic device (Programmable Logic Device, PLD), or any combination thereof. The processor 201 may also be other apparatuses with processing functions, such as a circuit, a device or a software module, which is not limited thereto.

The communication interface 202 is configured to communicate with other devices or other communication networks. The other communication networks may be the Ethernet, radio access network (Radio Access Network, RAN), wireless local area networks (Wireless Local Area Networks, WLAN), etc. The communication interface 202 may be a module, a circuit, a communication interface, or any apparatus capable of implementing communication.

The communication line 203 is configured to transfer information between the components included in the apparatus 200 for updating the functional module.

The memory 204 is configured to store instructions. The instructions may be a computer program.

The memory 204 may be a read-only memory (Read-Only Memory, ROM) or other types of static storage devices that may store static information and instructions, or a random access memory (Random Access Memory, RAM) or other types of dynamic storage devices that may store information and instructions, or may also be an electrically erasable programmable read-only memory (Electrically Erasable Programmable Read-Only Memory, EEPROM), a read-only compact disc (Compact Disc Read-Only Memory, CD-ROM) or other optical disc storages, optical disc storages (including a compact optical disc, a laser disc, an optical disc, a digital versatile disc, a Blu-ray disc, or the like), a magnetic disk storage medium or other magnetic storage devices, etc., which is not limited thereto.

It should be noted that, the memory 204 may exist independently of the processor 201, or may be integrated with the processor 201. The memory 204 may be configured to store instructions or program codes or some data, etc. The memory 204 may be located inside the apparatus 200 for updating the functional module or outside the apparatus 200 for updating the functional module, which is not limited thereto. The processor 201 is configured to execute the instructions stored in the memory 204 to implement the method for updating the functional module provided in the following embodiments of the present disclosure.

In an example, the processor 201 may include one or more CPUs, e.g., CPU0 and CPU1 in FIG. 2.

As an optional implementation, the apparatus 200 for updating the functional module includes a plurality of processors, and for example, in addition to the processor 201 in FIG. 2, a processor 207 may also be included.

As an optional implementation, the apparatus 200 for updating the functional module also includes an output unit 205 and an input unit 206. Exemplarily, the input unit 206 is a keyboard, a mouse, a microphone or a joystick, etc., and the output unit 205 is a display screen and a speaker, etc.

It should be noted that, the apparatus 200 for updating the functional module may be a desktop computer, a portable computer, a network server, a mobile phone, a tablet computer, a wireless terminal, an embedded device, a chip system or a device with similar structures as shown in FIG. 2. In addition, the composition structures shown in FIG. 2 do not constitute a limitation on the various devices in FIG. 1 and FIG. 2, and in addition to the components shown in FIG. 2, the various devices in FIG. 1 and FIG. 2 may include more or fewer components than shown in the figures, or combine certain components, or include different component arrangements.

In the embodiments of the present disclosure, the chip system may be formed by a chip, or may also include a chip and other discrete devices. In addition, actions, terms, etc., involved between the various embodiments of the present disclosure may refer to each other, which are not limited thereto. In the embodiments of the present disclosure, message names or parameter names in messages, etc., interacted between the various devices, are only examples, and other names may also be adopted, which are not limited thereto.

The method for updating the functional module provided in the embodiments of the present disclosure is described below in conjunction with the communication system shown in FIG. 1. The actions, terms, etc., involved between the various embodiments of the present disclosure may refer to each other, which are not limited thereto. The actions involved in the various embodiments of the present disclosure are only examples, and other names may also be adopted, for example: "included/comprised in/on/within" described in the embodiments of the present disclosure may also be replaced by "carried on" or "carried in", etc.

FIG. 3 is a method for updating a functional module, provided in the embodiments of the present disclosure. As shown in FIG. 3, the method may include the following steps.

S301, a second node sends updating information to a first node.

The first node may be the first node in FIG. 1, or a device of the first node in FIG. 1, such as a chip or a system on chip. The second node may be the second node in FIG. 1, or a device of the second node in FIG. 2, such as a chip or a system on chip. Exemplarily, the first node is a terminal, and the second node is a base station.

In the embodiments of the present disclosure, the updating information may also be referred to as functional module updating information, or updating indication information, or updating indication information of the functional module, or other names.

The updating information may be used to indicate updating of the functional module, such as indicating matters related to the updating of the functional module. In some embodiments, the updating information being used to indicate the updating of the functional module, may include that: the updating information is used to indicate a functional module for updating and/or a number K of functional modules for updating, where K is a positive integer. It should be understood that, the functional module for updating indicated by the updating information may refer to a functional module to be updated or a functional module that needs to be updated, and for convenience of description, the functional module for updating is taken as an example for explanation in the embodiments of the present disclosure. The number K indicated by the updating information may refer to the number K of functional modules to be updated or the number K of functional modules that need to be updated.

The functional module described in the embodiments of the present disclosure may be the Al model as described above.

In an example, the updating information may include at least one information of the following 1-1 to 1-5.

### 1-1, composition information of the functional module for updating.

The composition information of the functional module may include a composition parameter that constitutes the functional module or implements the function of the functional module, and for example, the composition information of the functional module may include at least one of a parameter of the functional module (or referred to as a model parameter) and a layer of the functional module. The composition information of the functional module may also be alternatively described as information of the functional module.

Taking an example in which the functional module is a neural network model, the composition information of the functional module may include a parameter of the neural network model (such as a number of iterations of the model, an allowable error, etc.) and a layer of the neural network model (such as an input layer, a hidden layer, an output layer, etc.).

### 1-2, updating mode.

The updating mode may refer to a mode for updating the functional module. For example, the updating mode may include updating all or a part of parameters of the functional module.

### 1-3, functional implementation of the functional module for updating.

The functional implementation of the functional module for updating may be understood as a mode of implementing the function of the functional module for updating. The function of the functional module may include but is not limited to data processing, information processing, or data training, etc. In some embodiments, the function implementation of the functional module for updating may include but is not limited to the mode in which the functional module for updating processes data, or the mode in which the functional module for updating processes information.

### 1-4, version number of the functional module for updating.

A same functional module may have different versions, and a version corresponds to a version number, and the version number is used to indicate the version of the functional module. For example, the version number may be number(s) and/or character(s), or a combination of number(s) and character(s), or a character string, etc., which is not limited thereto. The corresponding version numbers of the same functional module before the updating and after the updating are inconsistent.

### 1-5, indication information of the functional module for updating.

The indication information of the functional module for updating may be used to indicate the functional module for updating, so as to acquire the functional module for updating. In some embodiments, the indication information of the functional module for updating may include but is not limited to download information of the functional module for updating, or index information of the functional module for updating.

The download information of the functional module for updating may include a download address of the functional module for updating, or information for indicating the download address, etc., where the download address of the functional module may refer to an Internet Protocol (IP) address or link for downloading the functional module or the composition information of the functional module. The index information of the functional module for updating may include the index number of the functional module, or an identifier for indicating the index number of the functional module for updating, etc. The index number of the functional module may be used to query the corresponding functional module. A functional module may correspond to an index number. For example, the index number of the functional module may be the serial number or name of the functional module.

In an example, the second node may generate the updating information and send the updating information to the first node. For example, the second node, after determining the functional module that needs to be updated or in response that the functional module configured by itself has been completely updated, may generate the updating information and send the updating information to the first node.

In another example, the second node, after receiving updating information from other nodes, may forward the updating information to the first node. For example, the other nodes may be the above-mentioned server. That is, the server, after completing the updating of the module, may send the updating information to the second node. In this way, the second node, after receiving the updating information, sends the updating information to the first node. Alternatively, the second node may update the functional module configured by itself according to the updating information, and send the updating information to the first node.

In yet another example, the second node may acquire configuration information of the first node, the configuration information may be used to indicate a functional module configured by the first node or a functional module that needs to be updated by the first node; and the second node sends the updating information to the first node according to the configuration information of the first node. The updating information indicates that the functional module for updating includes all or a part of functional modules indicated by the configuration information of the first node.

For example, functional modules for updating indicated by the updating information received by the second node may include functional module 1 to functional module 8. The functional modules configured by the second node include functional module 1 to functional module 5. The second node may update all or a part of the functional module 1 to the functional module 5 according to the updating information, and send for indicating the updating of the functional module 1 to functional module 5 or for indicating the updating of the module 1 to functional module 8, to the first node.

In the embodiments of the present disclosure, the second node may periodically send the updating information to the first node, may aperiodically send the updating information to the first node, or may send the updating information to the first node in a case where a preset condition is satisfied. The first preset condition may be used to trigger the second node to send the updating information to the first node. For example, the first preset condition may include at least one of: the functional module of the first node being completely updated, or transmission resource utilization of the first node being lower than a threshold.

In the embodiments of the present disclosure, the second node may send the updating information to the first node in any one of: a broadcast mode, a multicast mode, or a unicast mode.

The broadcast mode may refer to that the second node sends the updating information to all nodes with which communication connections are established. The first node is included in the all nodes.

The multicast mode may refer to that the second node sends the updating information to a group of nodes among all nodes with which communication connections are established. The first node is included in the group of nodes. The multicast mode may also be referred to as the multi-cast mode.

The unicast mode may refer to that the second node sends the updating information to only the first node. The unicast mode may also be referred to as a peer-to-peer (Peer-to-Peer, P2P) mode.

S302, the first node receives the updating information from the second node.

Based on the method shown in FIG. 3, when the second node determines that the functional module needs to be updated or has completed the functional module configured by itself, the second node may send the updating information to the first node, so that the second node may determine whether to perform the updating operation according to the updating information, and complete the updating of the functional module in a case where it determines to perform the updating operation.

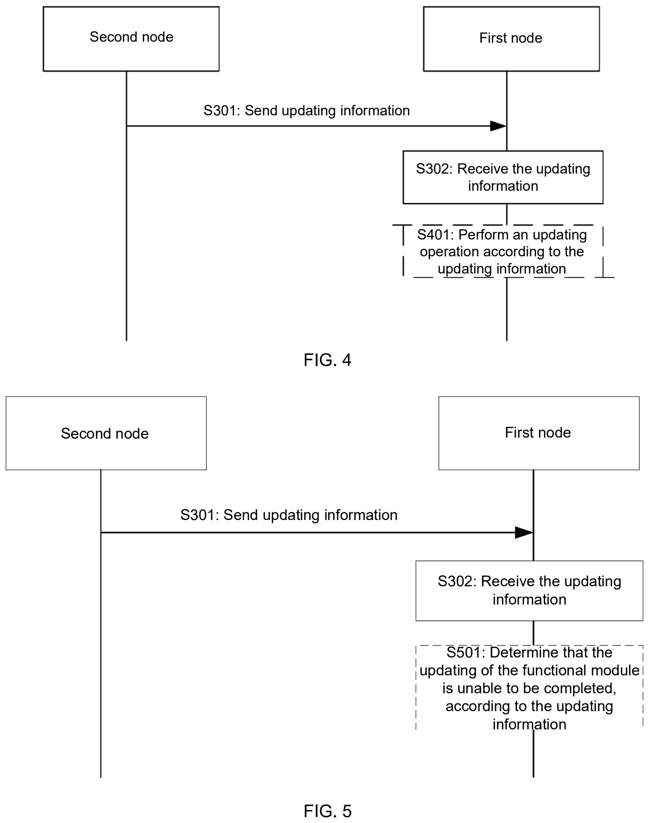

Furthermore, the first node, after receiving the updating information from the second node, may perform the following process shown in FIG. 4 or FIG. 5 based on the received updating information.

As shown in FIG. 4, after the first node receives the updating information, the method provided in the embodiments of the present disclosure may further include the following step.

S401, the first node performs an updating operation according to the updating information.

Performing the updating operation may also be described as updating the configured functional module, or performing the updating operation on the configured functional module. Similarly, not performing the updating operation may also be described as not updating the configured functional module, or not performing the updating operation on the configured functional module.

In an example, the first node may acquire composition information or partial composition information of the functional module that needs to be updated, from the second node or the server or other nodes.

In a possible scenario, the updating information includes at least one of 1-1 to 1-5, and the first node may determine the functional module that needs to be updated according to the updating information (such as the composition information or version number of the functional module for updating), and perform the updating operation according to its own configuration information.

The configuration information may include one or more of the name, composition information, index information, and version number of the functional module configured by the first node.

In the embodiments of the present disclosure, the first node performing the updating operation according to its own configuration information may refer to that: the first node updates K1 functional modules among K functional modules according to the updating information. K1 is an integer greater than or equal to 0 and less than or equal to K.

The first node updating the K1 functional modules may include: updating composition information of the K1 functional modules, or updating partial composition information of the K1 functional modules.

For example, the updating information received by the first node indicates that functional modules for updating include functional module 1 to functional module 8. The first node is configured with functional module 1 to functional module 6, and then the first node may update the functional module 1 to the functional module 6.

For another example, the updating information indicates that the functional modules for updating include functional module 1 to functional module 8. The first node is configured with functional module 2 to functional module 9, and then the first node may update the functional module 2 to the functional module 8.

For another example, the updating information indicates that the functional modules for updating include functional module 1 to functional module 8. The first node is configured with functional module 1 to functional module 8, and then the first node may update the functional module 1 to the functional module 8.

Furthermore, when the first node updates the K1 functional modules, the following Scenario 1 to Scenario 3 may be included.

Scenario 1: the first node does not have information of the K1 functional modules.

In this scenario, the first node may acquire the information of the K1 functional modules, and update the K1 functional modules according to the acquired information.

For example, the first node may acquire the composition information of the K1 functional modules from the second node and/or the third node mentioned above.

Scenario 2: the first node has information of the K1 functional modules, but the information of the K1 functional modules is all different from information of the K1 functional modules indicated by the updating information.

The information of the K1 functional modules being different from the information of the K1 functional modules indicated by the updating information may include one or more of: version information of the K1 functional modules being different from version information of the K1 functional modules indicated by the updating information, index information of the K1 functional modules being different from index information of the K1 functional modules indicated by the updating information, and indication information of the K1 functional modules being different from indication information of the K1 functional modules indicated by the updating information.

In this scenario, the first node may acquire the information of the K1 functional modules, and update the K1 functional modules according to the acquired information.

Scenario 3: the first node has information of the K1 functional modules, but the information of the K1 functional modules is partially same as information of the K1 functional modules indicated by the updating information.

The information of the K1 functional modules being partially same as the information of the K1 functional modules indicated by the updating information may refer to that: information of partial functional modules among the information of the K1 functional modules possessed by the first node is the same as the information of the K1 functional modules indicated by the updating information.

For example, the K1 functional modules are functional module 1 to functional module 6. In the first node, information of the functional module 1 is the same as that of the functional module 1 indicated by the updating information, but information of the functional module 2 to the functional module 6 is different from information of the functional module 2 to the functional module 6 indicated by the updating.

In this scenario, the first node may acquire information of a functional module that is different from the information of the functional module indicated by the updating information, among the K1 functional modules, and update the functional module according to the acquired information of the functional module.

For example, the first node may update the functional module 1 according to the stored information of the functional module 1. The first node may acquire information of the functional module 2 to functional module 6, and update the functional module 2 to functional module 6 according to the acquired information.

Based on the method shown in FIG. 4, the first node may accurately perform the updating operation according to the updating information of the second node.

In some embodiments, in the above S401, the method for the first node to perform the updating operation may include that: the first node performs the updating operation according to updating time indication information.

The updating time indication information may be used to indicate updating time of the functional module. For example, the updating time indication information may include at least one of: updating start time, updating deadline time, and updating lasting time.

The updating start time may refer to the time when the first node starts performing the updating operation and the time when the first node ends performing the updating operation.

The updating deadline time may refer to the time when the first node stops performing the updating operation.

The updating lasting time may refer to a duration in which the first node performs the updating operation.

In an example, the above-mentioned updating time indication information may be included in the updating information, or may be a separate signaling, which is not limited thereto.

Based on the method shown in the above embodiments, the first node may accurately determine the time for performing the updating operation according to the updating time indication information. That is, the first node may perform the updating operation according to the updating time indicated by the second node. In this way, subsequently, the first node completes the updating of the functional module within the updating time indicated by the second node, and then may continue to communicate with the second node, by using the functional module for updating.

In some embodiments, after the first node completes the updating of the functional module, the first node may notify an updating state of the functional module of the first node in the following Mode 1 or Mode 2, to the second node.

Mode 1: the first node sends first information to the second node. Accordingly, the second node receives the first information from the first node.

The first information may be used to indicate that the updating of the functional module is completed, or may be used to indicate a functional module that is completely updated.

In an example, the first information may include at least one of: indication information that the updating is completed, information of the functional module that is completely updated, and enabling time information of the functional module that is completely updated.

The indication information that the updating is completed may be used to indicate that the functional module is completely updated. In some embodiments, the indication information that the updating is completed may include one or more characters. The one or more characters may be used to indicate that the functional module is updated completely. For example, the one or more characters may be "update completed".

The information of the functional module that is completely updated may be used to indicate the functional module that is completely updated. In some embodiments, the information of the functional module that is completely updated may include, but not is limited to, the composition information or index number of the functional module that is completely updated.

The enabling time information of the functional module that is completely updated may be used to indicate enabled time (Enable Time) of the functional module for updating. The enabled time of different functional modules may be the same or different.

In a scenario, in a case where the first node completely updates all functional modules indicated by the updating information, the first information may be used to indicate that the functional modules are completely updated.

In another scenario, in a case where the first node completely updates a part of functional modules among all functional modules indicated by the updating information, the first information may be used to indicate the functional modules that are completely updated.

Mode 2: the first node sends second information to the second node by the functional module that is completely updated.

The second information may be used to indicate the functional module that is completely updated or may be other communication information (e.g., may be request information sent to the second node, etc.). When the second information is used to indicate the functional module that is completely updated, for the second information, reference may be made to the above description of the first information, which will not be repeated. In this way, the first node does not need to send signaling that the functional module is completely updated and enabled, to the second node, which may reduce the signaling overhead and save latency.

In some scenarios, since the second information is information sent by the first node to the second node through the functional module that is completely updated, the second information may not include the above-mentioned information of the functional module that is completely updated.

Based on this embodiment, the first node, after updating the functional module, may send the information for indicating that the updating of the functional module is completed, to the second node, so that the second node may accurately determine the updating state of the first node, so that the functional module for updating may be used for subsequent communication.

In some embodiments, in a case where the updating operation is not completed by the first node, for example, the first node updates a part of functional modules among the functional modules indicated by the updating information. The method provided in the embodiments of the present disclosure may further include that: the first node may send third information to the second node.

The third information may be used to indicate that the functional operation is not completed. For example, the third information may include a cause that the updating operation is not completed. The third information may also be used to indicate a functional module that is not updated completely.

In an example, the cause that the first node does not complete the updating operation may include that: a duration for the first node performing the updating operation does not satisfy a preset condition, or a part of functional modules among the functional modules indicated by the updating information are updated unsuccessfully.

The preset condition may include that the duration for the first node performing the updating operation exceeds a preset updating duration. The preset updating duration may be a duration determined by the updating time indication information. For example, the preset updating duration may be a duration between updating start times. For another example, the preset updating duration may be a duration between the time when the first node receives the updating time indication information and the updating deadline time. For another example, the preset updating duration may be a duration indicated by updating lasting time.

A part of functional modules being unsuccessfully updated may refer to that: in a process of the first node updating the functional module, the first node is unable to update the functional module due to the inability to acquire the updating data of the functional module or due to the insufficient updating resources (such as central processing unit (Central Processing Unit, CPU), memory, power, etc.) of the first node.

Based on this embodiment, in a case where the updating is not completed by the first node, the first node may notify the second node, to avoid the situation where the second node uses the functional module for updating to communicate with the first node in a case where the first node does not complete the updating of the functional module, resulting in communication abnormalities between the first node and the second node.

In some embodiments, before the first node updates the functional module completely, in the embodiments of the present disclosure, communication methods between the first node and the second node may include the following Method 1 and Method 2.

Method 1: the first node communicates with the second node by using a functional module before being updated.

Method 2: the first node communicates with the second node by using a preset mode.

The preset mode may be a mode configured by default or a mode notified by the second node or other nodes, which is not limited thereto.

In an example, when the preset mode is a mode notified by the second node, the preset mode may be notified by the second node by the updating information. For example, the updating information includes the preset mode.

Based on this embodiment, when the first node does not perform the updating operation or does not completely update the functional module, the first node may continue to communicate with the second node by using the functional module that has not been updated or the preset mode, thereby ensuring the normal communication between the first node and the second node.

In some embodiments, after the first node updates the functional module, the first node may enable the functional module that is completely updated, according to validation indication information.

The validation indication information may be used to indicate a functional module for enabling. For example, the validation indication information may include one or more of indication information of an functional module for enabling, a number of functional modules for enabling, and time.

In a possible scenario, the validation indication information may be included in the updating information, or may be separate information sent by the second node to the first node.

In an example, the validation indication information is included in the updating information. For example, the updating information received by the first node may include function modules that need to be updated and validation information (such as validation time, etc.) of each functional module.

Herein, the validation time of different functional modules may be the same or different.

In another example, the validation indication information is separate information. For example, the second node may send the updating information and the validation indication information to the first node, respectively. For another example, the second node, after determining the functional module that is completely updated by the first node (such as receiving the first information), may send the validation indication information to the first node.

The validation indication information may include validation information of the functional module that is completely updated by the first node.

Based on this embodiment, the first node may accurately enable the functional module for updating according to the validation indication information.

In some embodiments, as shown in FIG. 5, after the first node receives the updating information, the method provided in the embodiments of the present disclosure may further include S501.

S501: the first node determines that the updating of the functional module is unable to be completed, according to the updating information.

Determining that the updating of the functional module is unable to be completed includes: the updating of functional modules not being completed (e.g., only a part of functional modules among the functional modules indicated by the updating information being updated) or not performing the updating operation.

In an example, the cause that the first node determines the updating of the functional module being unable to be completed may include at least one of the following 5-1 to 5-5:

5-1, a duration for performing the updating operation does not satisfy a preset condition.

The preset condition may include that the duration for performing the updating operation exceeds a preset updating duration.

The preset updating duration may be determined according to the updating time indication information. For example, the preset updating duration may be a duration between updating start times, or may be updating lasting time, or may be a duration between the time when the first node receives the updating information and the updating deadline time.

For example, in a process where the first node performs the updating operation according to the updating information, when the duration for performing the updating operation reaches the preset updating duration and there are still functional modules that have not been updated, the first node may stop the updating operation.

Furthermore, the first node, after stopping the updating operation, may continue the updating operation in a next updating cycle.

The next updating cycle may refer to next updating time indication information, or may also refer to the time when the first node is in an idle state, which is not limited thereto.

5-2, a part of functional modules among functional modules indicated by the updating information are unsuccessfully updated.

The part of functional modules being unsuccessfully updated may include that the first node has not updated the part of functional modules, or that the first node unsuccessfully updates when updating the part of functional modules.

5-3, the first node is not configured with a functional module indicated by the updating information.

For example, the updating information is used to indicate the updating of functional module 1 to functional module 8, and the first node is only configured with functional module 9 and functional module 10, that is, the first node is not configured with the functional modules indicated by the updating information.

5-4, the first node is unable to complete the updating within a preset updating duration.

For example, the first node, after receiving the updating information and determining the functional module that needs to be updated, may estimate/determine/predict a duration required for completely updating the functional module. When the duration required for completely updating the functional module exceeds the preset updating duration, the first node may determine that the updating is unable to be completed within the preset updating duration. In this way, the first node may not perform the updating operation.

The first node may determine the updating duration of the functional module according to a historical updating duration of the functional module, to acquire a total updating duration of all functional modules. Of course, the first node may also determine the updating duration of each functional module in other ways, and then calculate a duration required for updating the all functional modules. For example, the first node may determine the updating duration of each functional module by way of model estimation.

5-5, the functional module indicated by the updating information is completely updated.

The functional module indicated by the updating information being completely updated may refer to that the functional module indicated by the updating information has been completely updated before the first node receives the updating information.

Furthermore, in the embodiments of the present disclosure, in a case where the first node determines that the updating of the functional module is unable to be completed, the first node may also send third information to the second node.

The third information may be used to indicate that the updating of the functional module is unable to be completed. For example, the third information may include the above-mentioned cause for determining that the updating of the functional module is unable to be completed.

Based on the method shown in FIG. 5, in the embodiments of the present disclosure, after the first node receives the updating information, the first node may also not perform the updating operation, to reduce power consumption. This avoids latency and the waste of functions caused by the first node being unable to complete the updating within the preset updating duration.

The various solutions in the above embodiments of the present disclosure may be combined without contradiction.

The embodiments of the present disclosure may divide an apparatus for updating the functional module into functional modules or functional units according to the above method examples; for example, various functional modules or functional units may be divided corresponding to various functions, or two or more functions may also be integrated into a processing module. The above integrated module may be implemented in the form of hardware or may be implemented in the form of a software functional module or functional unit. The division of the modules or units in the embodiments of the present disclosure is schematic, which is only a logical functional division, and there may be other divisions in actual implementations.

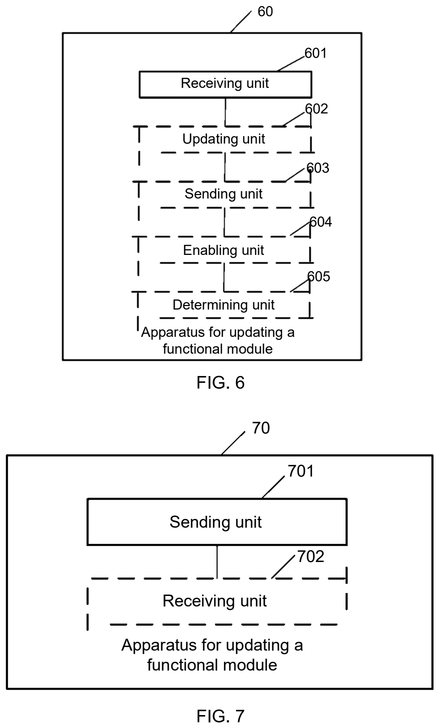

In a case where various functional modules are divided corresponding to various functions, FIG. 6 shows a structural schematic diagram of an apparatus for updating a functional module 60, and the apparatus for updating the functional module 60 may be configured to perform the functions involved in the first node in the above embodiments. The apparatus 60 for updating the functional module shown in FIG. 6 may include: a receiving unit 601.

The receiving unit 601 is configured to receive updating information from a second node. The updating information is used to indicate updating of a functional module.

In an example, the updating information includes at least one of: composition information of a functional module for updating, an updating mode, a functional implementation of a functional module for updating, a version number of a functional module for updating, indication information of a functional module for updating.

In an example, the indication information of the functional module for updating includes at least one of: download information of the functional module for updating, index information of the functional module for updating.

In an example, indicating the updating of the functional module includes: indicating the functional module for updating and/or a number K of functional modules for updating; where K is a positive integer.

In an example, as shown in FIG. 6, the apparatus 60 for updating the functional module further includes an updating unit 602. The updating unit 602 is configured to update K1 functional modules among K functional modules according to the updating information, where K1 is an integer greater than or equal to 0 and less than or equal to K.

In an example, updating the K1 functional modules among the K functional modules includes: updating composition information of the K1 functional modules; updating partial composition information of the K1 functional modules.

In an example, updating the K1 functional modules among the K functional modules includes:
updating the K1 functional modules according to updating time indication information.

In an example, the updating time indication information includes at least one of: updating start time, updating deadline time, updating lasting time.

In an example, the updating time indication information is included in the updating information.

In an example, as shown in FIG. 6, the apparatus 60 for updating the functional module further includes a sending unit 603. The sending unit 603 is configured to send first information to the second node, where the first information is used to indicate that the updating of the functional module is completed; or, send second information to the second node through the functional module that is completely updated.

In an example, the first information and/or the second information includes at least one of: indication information that the updating is completed, information of the functional module that is completely updated, enabling time information of the functional module that is completely updated.

In an example, before the updating is completed, the sending unit 603 is further configured to: communicate with the second node, by using a functional module before being updated; or communicate with the second node, by using a preset mode.

In an example, a method for determining the preset mode includes at least one of: being configured by default; being notified by the second node.

In an example, being notified by the second node includes: being notified by the second node by the updating information.

In an example, as shown in FIG. 6, the apparatus 60 for updating the functional module further includes an enabling unit 604. The enabling unit 604 is configured to enable the functional module that is completely updated, according to validation indication information.

In an example, the validation indication information is notified by the second node.

In an example, as shown in FIG. 6, the apparatus 60 for updating the functional module further includes a determining unit 605. The determining unit 605 is configured to: determine that the updating of the functional module is unable to be completed, according to the updating information; where the updating of the functional module being unable to be completed includes: the functional module not being completely updated, or not performing an updating operation.

In an example, a cause for the updating of the functional module being unable to be completed includes at least one of: a duration for performing the updating operation not satisfying a preset condition; a part of functional modules among functional modules indicated by the updating information being unsuccessfully updated; the first node being not configured with a functional module indicated by the updating information; the updating being unable to be completed within a preset updating duration; or a functional module indicated by the updating information being completely updated.

In an example, the preset condition includes: the duration for performing the updating operation exceeding a preset updating duration.

In an example, the preset updating duration is determined according to updating time indication information.

In an example, the sending unit 603 is further configured to: send third information to the second node, where the third information is used to indicate that the updating of the functional module is unable to be completed.

In an example, a mode in which the first node receives the updating information includes any one of: receiving the updating information in a broadcast mode; receiving the updating information in a multicast mode; receiving the updating information in a unicast mode.

In an example, a mode of sending the updating information includes any one of: periodically sending; sending in a case where a preset condition is satisfied; aperiodically sending.

As another implementation, the receiving unit 601 and the sending unit 603 in FIG. 6 may be replaced by a communication interface, and the communication interface may integrate the functions of the receiving unit 601 and the sending unit 603.

Furthermore, when the receiving unit 601 and the sending unit 603 are replaced by a processor, the apparatus 60 for updating the functional module involved in the embodiments of the present disclosure may be the apparatus for updating the functional module shown in FIG. 2.

In a case where various functional modules are divided corresponding to various functions, FIG. 7 shows a structural schematic diagram of an apparatus for updating a functional module 70, and the apparatus for updating the functional module 70 may be configured to perform the functions involved in the second node in the above embodiments. The apparatus 70 for updating the functional module shown in FIG. 7 may include: a receiving unit 701.

The sending unit 701 is configured to send updating information to a first node, where the updating information is used to indicate a functional module for updating.

In an example, the updating information includes at least one of: composition information of a functional module for updating, an updating mode, a functional implementation of a functional module for updating, a version number of a functional module for updating, indication information of a functional module for updating.

In an example, the indication information of the functional module for updating includes at least one of: download information of the functional module for updating, index information of the functional module for updating.

In an example, indicating the updating of the functional module includes: indicating the functional module for updating and/or a number K of functional modules for updating; where K is a positive integer.

In an example, the updating information includes updating time indication information.

In an example, the updating time indication information includes at least one of: updating start time, updating deadline time, updating lasting time.

In an example, as shown in FIG. 7, the apparatus 70 for updating the functional module further includes a receiving unit 702. The receiving unit 702 is configured to receive first information from the first node, where the first information is used to indicate that the updating of the functional module is completed; or receive second information from the first node, where the second information is sent by the first node enabling the functional module that is completely updated.

In an example, the first information and/or the second information includes at least one of: indication information that the updating is completed, information of the functional module that is completely updated, enabling time information of the functional module that is completely updated.

In an example, the updating information also includes validation indication information.

In an example, the receiving unit 702 is further configured to: receive third information from the first node, where the third information is used to indicate that the updating of the functional module is unable to be completed.

In an example, a cause for the updating of the functional module being unable to be completed includes at least one of: a duration for performing the updating operation not satisfying a preset condition; a part of functional modules among functional modules indicated by the updating information being unsuccessfully updated; the first node being not configured with a functional module indicated by the updating information; the updating being unable to be completed within a preset updating duration; or a functional module indicated by the updating information being completely updated.

In an example, the preset condition includes: the duration for performing the updating operation exceeding a preset updating duration.

In an example, the preset updating duration is determined according to updating time indication information.

In an example, a mode in which the second node sends the updating information to the first node includes any one of: receiving the updating information in a broadcast mode; receiving the updating information in a multicast mode; receiving the updating information in a unicast mode.

In an example, a sending mode of the updating information includes any one of: periodically sending; sending in a case where a preset condition is satisfied; aperiodically sending.

As another implementation, the sending unit 701 and the receiving unit 702 in FIG. 7 may be replaced by a communication interface, and the communication interface may integrate the functions of the sending unit 701 and the receiving unit 702.

Furthermore, in an example, when the sending unit 701 and the receiving unit 702 are replaced by a communication interface, the apparatus 70 for updating the functional module involved in the embodiments of the present disclosure may be the apparatus for updating the functional module shown in FIG. 2.

The embodiments of the present disclosure further provide a computer readable storage medium. All or a part of the procedures in the method embodiments mentioned above may be completed by related hardware instructed by a computer program. The program may be stored in above-mentioned computer readable storage medium. The program, when executed, may include procedures of the various method embodiments described above. The computer readable storage medium may be an internal storage unit of the apparatus for updating the functional module (including the data sending end and/or the data receiving end) of any one of the aforementioned embodiments, such as a hard disk or a memory of the apparatus for updating the functional module. The above-mentioned computer readable storage medium may also be an external storage device of the above-mentioned apparatus, such as a plug-in hard disk, a smart memory card (Smart Media Card, SMC), a secure digital (Secure Digital, SD) card, a flash card, etc., equipped on the above-mentioned apparatus. Furthermore, the above-mentioned computer readable storage medium may also include both an internal storage unit and an external storage device of the above-mentioned apparatus for updating the functional module. The above-mentioned computer readable storage medium is used to store the above-mentioned computer program, and other programs and data required for the above-mentioned signal detection apparatus. The above-mentioned computer readable storage medium may also be used to temporarily store data that has been output or is to be output. The above-mentioned computer readable storage medium includes a non-transitory computer readable storage medium.

It should be noted that, the terms such as "first" and "second", etc., in the description and claims and the drawings of the present disclosure are used for distinguishing different objects, but not used for describing a specific order. Furthermore, the terms "comprise/include/contain" and "have" and any derivations thereof are intended to cover non-exclusive inclusion. For example, a process, method, system, product or device that contains a series of steps or units is not limited to the listed steps or units, but optionally, also includes steps or units that are not listed, or optionally, also includes other steps or units inherent to the process, method, product or device.

From the description of the above implementations, those skilled in the art may clearly understand that, for convenience and brevity of description, the division of the above-mentioned various functional modules is illustrated only by way of an example, and in actual applications, the above-mentioned functions may be allocated to be completed by different functional modules as needed, that is, an internal structure of the apparatus is divided into different functional modules to complete all or a part of the functions mentioned above.

In several embodiments provided in the present disclosure, it should be understood that, the disclosed apparatuses and methods may be implemented in other ways. For example, the apparatus embodiments described above are merely exemplary, for example, the division of the modules or units is only a logical functional division, and there may be other divisions in actual implementations; for example, a plurality of units or components may be combined or integrated into another apparatus, or some features may be ignored or not performed. On the other hand, the mutual coupling or direct coupling or communication connection shown or discussed may be an indirect coupling or communication connection by some interfaces, apparatuses or units, and may be electrical, mechanical or in other forms.

The units described as separate components may be or may not be physically separated, and the component shown as the unit may be a physical unit or a plurality of physical units, that is, it may be located in a place, or may be distributed to a plurality of different places. A part or all of the units may be selected according to actual needs to achieve the purposes of the solutions in the embodiments.

In addition, the various functional units in the various embodiments of the present disclosure may be integrated into a processing unit, or the various units may exist separately and physically, or two or more units may be integrated into a unit. The above-mentioned integrated unit may be implemented in the form of hardware or may be implemented in the form of a software functional unit.

If the integrated unit is implemented in the form of a software functional unit, and sold or used as an independent product, the integrated unit may be stored in a readable storage medium. Based on this understanding, the technical solutions of the embodiments of the present disclosure may be essentially, or a part of the technical solutions that contributes to the existing technologies, or a part of all of the technical solutions, may be embodied in the form of a software product, and the software product is stored in a storage medium, and includes a plurality of instructions to cause a device (which may be a single-chip, a chip, etc.) or processor to perform a part or all of the steps of the methods of various embodiments of the present disclosure. The aforementioned storage media includes various types of medium capable of storing program codes, such as: a U disk (USB flash disk), a mobile hard disk, a read-only memory (ROM), a random access memory (RAM), a magnetic disk or an optical disk, etc.

The aforementioned descriptions are merely specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure should be based on the protection scope of the claims.

## Claims

1. A method for updating a functional module, **characterized in that** the method is applied to a first node, and comprises:
receiving updating information from a second node, wherein the updating information is used to indicate updating of a functional module.

2. The method according to claim 1, wherein the updating information comprises at least one of:
composition information of a functional module for updating;
an updating mode;
a functional implementation of a functional module for updating;
a version number of a functional module for updating;
indication information of a functional module for updating.

3. The method according to claim 2, wherein the indication information of the functional module for updating comprises at least one of:
download information of the functional module for updating;
index information of the functional module for updating.

4. The method according to claim 1, wherein indicating the updating of the functional module comprises: indicating the functional module for updating and/or a number K of functional modules for updating; wherein the K is a positive integer.

5. The method according to claim 4, further comprising:
updating K1 functional modules among K functional modules according to the updating information, wherein the K1 is an integer greater than or equal to 0 and less than or equal to K.

6. The method according to claim 5, wherein updating the K1 functional modules among the K functional modules comprises:
updating composition information of the K1 functional modules;
updating partial composition information of the K1 functional modules.

7. The method according to claim 5, wherein updating the K1 functional modules among the K functional modules comprises:
updating the K1 functional modules according to updating time indication information.

8. The method according to claim 7, wherein the updating time indication information comprises at least one of:
updating start time;
updating deadline time;
updating lasting time.

9. The method according to claim 7, wherein
the updating time indication information is comprised in the updating information.

10. The method according to claim 5, further comprising:
sending first information to the second node, wherein the first information is used to indicate that the updating of the functional module is completed; or
sending second information to the second node through the functional module that is completely updated.

11. The method according to claim 10, wherein the first information and/or the second information comprises at least one of:
indication information that the updating is completed;
information of the functional module that is completely updated;
enabling time information of the functional module that is completely updated.

12. The method according to claim 5, wherein before the updating is completed, the method further comprises at least one of:
communicating with the second node, by using a functional module before being updated;
communicating with the second node, by using a preset mode.

13. The method according to claim 5, further comprising:
enabling the functional module that is completely updated, according to validation indication information.

14. The method according to claim 13, wherein the validation indication information is notified by the second node.

15. The method according to claim 1, further comprising:
determining that the updating of the functional module is unable to be completed, according to the updating information;
wherein the updating of the functional module being unable to be completed comprises: the functional module not being completely updated, or not performing an updating operation.

16. The method according to claim 15, wherein a cause for the updating of the functional module being unable to be completed comprises at least one of:
a duration for performing the updating operation not satisfying a preset condition;
a part of functional modules among functional modules indicated by the updating information being unsuccessfully updated;
the first node being not configured with a functional module indicated by the updating information;
the updating being unable to be completed within a preset updating duration; or
a functional module indicated by the updating information being completely updated.

17. The method according to claim 16, wherein the preset condition comprises:
the duration for performing the updating operation exceeding a preset updating duration.

18. The method according to claim 15, further comprising:
sending third information to the second node, wherein the third information is used to indicate that the updating of the functional module is unable to be completed.

19. A method for updating a functional module, **characterized in that** the method is applied to a second node, and comprises:
sending updating information to a first node, wherein the updating information is used to indicate a functional module for updating.

20. The method according to claim 19, wherein the updating information comprises at least one of:
composition information of a functional module for updating;
an updating mode;
a functional implementation of a functional module for updating;
a version number of a functional module for updating;
indication information of a functional module for updating.

21. The method according to claim 20, wherein the indication information of the functional module for updating comprises at least one of:
download information of the functional module for updating;
index information of the functional module for updating.

22. The method according to claim 19, wherein indicating the updating of the functional module comprises: indicating the functional module for updating and/or a number K of functional modules for updating; wherein the K is a positive integer.

23. The method according to claim 19, wherein the updating information comprises updating time indication information.

24. The method according to claim 23, wherein the updating time indication information comprises at least one of:
updating start time;
updating deadline time;
updating lasting time.

25. The method according to claim 19, further comprising:
receiving first information from the first node, wherein the first information is used to indicate that the updating of the functional module is completed; or
receiving second information from the first node, wherein the second information is sent by the first node enabling the functional module that is completely updated.

26. The method according to claim 25, wherein the first information and/or the second information comprises at least one of:
indication information that the updating is completed;
information of the functional module that is completely updated;
enabling time information of the functional module that is completely updated.

27. The method according to claim 19, wherein the updating information further comprises validation indication information.

28. The method according to claim 19, wherein the method further comprises:
receiving third information from the first node, wherein the third information is used to indicate that the updating of the functional module is unable to be completed.

29. The method according to claim 28, wherein a cause for the updating of the functional module being unable to be completed comprises at least one of:
a duration for performing the updating operation not satisfying a preset condition;
a part of functional modules among functional modules indicated by the updating information being unsuccessfully updated;
the first node being not configured with a functional module indicated by the updating information;
the updating being unable to be completed within a preset updating duration; or
a functional module indicated by the updating information being completely updated.

30. The method according to claim 29, wherein the preset condition comprises:
the duration for performing the updating operation exceeding a preset updating duration.

31. A first node, **characterized by** comprising: a processor and a communication interface, wherein the processor and the communication interface support the first node to receive updating information from a second node, wherein the updating information is used to indicate updating of a functional module.

32. A second node, **characterized by** comprising: a processor and a communication interface, wherein the processor and the communication interface support the second node to send updating information to a first node, wherein the updating information is used to indicate updating of a functional module.

33. A computer readable storage medium, **characterized in that** the computer readable storage medium comprises computer instructions;
wherein when the computer instructions are executed, the method for updating a functional module according to any one of claims 1 to 18 or according to any one of claims 19 to 30 is implemented.
